# EUROPEAN PATENT APPLICATION

(11) **EP 4 390 807 A1**
(43) Date of publication of application: **26.06.2024**
(21) Application number: 22214583.1
(22) Date of filing: 19.12.2022
(51) Int. Cl.: G06Q 10/087

(54) **AUTOMATIC DETECTION AND STORAGE OF ASSET LOCATION AND ASSET COMPOSITION**

(71) Applicant: Hitachi Energy Ltd, 8050 Zürich (CH)
(72) Inventor: DAN, Andrei-Marian, 8112 Otelfingen (CH); DECK, Bernhard, 79809 Weilheim, BW (DE)
(74) Representative: Vossius & Partner Patentanwälte Rechtsanwälte mbB

(57) **Abstract**

The present disclosure relates to a method for detection and storage of asset information, the method comprising scanning, by a mobile terminal, an identification tag of an asset, the identification tag comprising asset information, determining, by the mobile terminal, a position of the mobile terminal using at least two localisation procedures and storing and/or transmitting, by the mobile terminal, the position of the mobile terminal as the position of the asset. The disclosure also relates to a corresponding mobile terminal and a system.

## Description

The present disclosure relates to a method, mobile terminal and system for detection and storage of asset location information. Furthermore, asset composition may be detected and stored.

Knowing the location of lEDs (Intelligent Electronic Device) and assets is becoming more important, as it is useful information for services and fleet management. In particular, lEDs are usually fixed in a location and do not move around such that the location is particularly useful for these devices. Traditional methods, such as using a GPS function within the lED is costly, as generally, the location needs to be determined just once. Although storing the location manually during engineering is also possible, the coordinates need to be retrieved and manually entered into the device. The possibility to enter the wrong format or typing errors as well as the use of inaccurate locations is high, so the quality of the data may suffer.

It is thus an object of the present disclosure to remedy the above deficiencies and provide an automatic detection and storage of an asset location.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a method for detection and storage of asset information, the method comprising scanning, by a mobile terminal, an identification tag of an asset, the identification tag comprising asset information, determining, by the mobile terminal, a position of the mobile terminal using at least two localisation procedures and storing and/or transmitting, by the mobile terminal, the position of the mobile terminal as the position of the asset.

Various embodiments may preferably implement the following features.

Preferably, the determining, by the mobile terminal, a position of the mobile terminal using at least two localisation procedures comprises determining the position of the mobile terminal based on a GPS signal as a first localisation procedure and a second localisation procedure. The second localisation procedure preferably comprises one of localisation via a cellular network, localisation via a reference point having a known location, localisation via another mobile terminal in the vicinity of the mobile terminal, manually correcting the position of the asset, or manually entering localisation data.

Preferably, the localisation procedure via a reference point having a known location comprises receiving, by the mobile terminal, coordinates of the reference point and measuring, by the mobile terminal, a distance from the mobile terminal to the reference point, and calculating, by the mobile terminal, the position of the mobile terminal based on the measured distance.

Preferably, measuring the distance is performed optically.

Preferably, the localisation procedure via a reference point is performed indoors.

Preferably, the localisation procedure via a cellular network comprises determining, by the mobile terminal, at least one network cell to which the mobile terminal is connected and calculating the position of the mobile terminal based on a location of the network cell.

Preferably, the method further comprises applying, by the mobile terminal, a zero-touch protocol, the zero-touch protocol comprising: identifying an address of a location-aware provisioning server, LAP server, establishing a connection between the mobile terminal and the LAP server, receiving, by the mobile terminal, asset information from the LAP server and transmitting, by the mobile terminal, the position of the asset to the LAP server.

Preferably, these steps are performed automatically without human intervention.

Preferably, the asset information comprises at least one of a type of asset, a location of the asset, previous locations of the asset, a maintenance state, a date of initial operation, components of the asset, or a composition of the asset.

Preferably, storing the position of the mobile terminal as the position of the asset comprises storing the position of the asset in a memory of the mobile terminal.

Preferably, transmitting the position of the mobile terminal as the position of the asset comprises transmitting the position of the asset to the asset and/or a remote server and storing the position of the asset on the asset and/or remote server, wherein preferably the transmitting is performed on demand.

Preferably, the information tag is a 2D barcode, a 3D barcode, a QR code, or an RFID tag. Preferably, the 2D barcode, the 3D barcode, or the QR code is displayed on a display of the asset and/or physically provided on the asset.

Preferably, the information tag is updated according to the determined position of the asset.

Preferably, the method is performed using a mobile app running on the mobile terminal.

Preferably, the asset is an Intelligent Electronic Device, IED, or a power system component.

The present disclosure further relates to a mobile terminal for detection and storage of asset information, wherein the mobile terminal comprises a processor configured to scan an identification tag of an asset, the identification tag comprising asset information, determine a position of the mobile terminal using at least two localisation procedures and store and/or transmit the position of the mobile terminal as the position of the asset.

Various embodiments may preferably implement the following features.

Preferably, the mobile terminal comprises a camera module, a memory, a transceiver module and at least one localisation module.

Preferably, the mobile terminal comprises a GPS module as a first localisation module.

Preferably, the processor is further configured to perform the method as described above.

The present disclosure further relates to a system for detection and storage of asset information. The system comprises an asset and a mobile terminal as described above.

Other aspects, features, and advantages will be apparent from the summary above, as well as from the description that follows, including the figures and the claims.

The invention will be further described with reference to the figures.
Fig. 1 shows a flow chart of a method according to an embodiment of the present disclosure.
Fig. 2 shows a diagram of a mobile terminal according to an embodiment of the present disclosure.
Figs. 3 and 4 show schematic depictions of a localisation procedure according to an embodiment of the present disclosure.

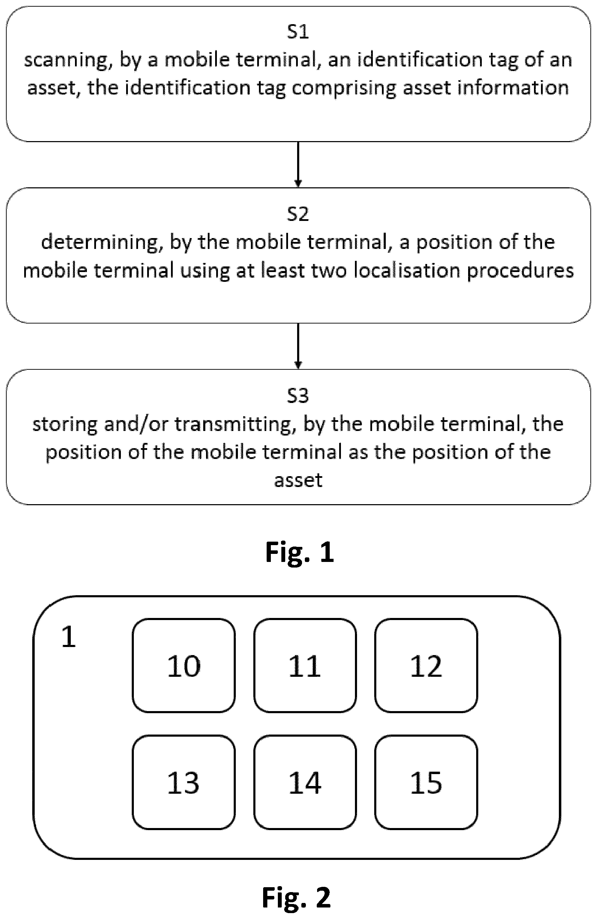

With reference to Figs. 1-4, in an electrical power network, it is advantageous to obtain the device type and the composition (asset information) in combination with the location of the asset 2 registered in order to have better service and overview on the installed base. In an embodiment, the information is preconditioned for condition monitoring as the number of assets 2 to be monitored is huge and the localization of the individual asset 2 is may be required in certain situations.

The asset information may be represented on an identification tag 21 such as a 2D or 3D barcode or QR code as sticker or other means like stamped on the device or displayed on a human-machine interface, HMI. In the latter case, the code may be refreshed in case of modifications of the composition. The asset may also comprise an RFID tag as an identification tag 21. The identification tag 21 may be displayed on a display of the asset 2 or physically provided on the asset 2. By scanning the identification tag 21 (Barcode 2D and 3D, QR code, RFID) with a mobile device (mobile terminal 1), which has localisation capabilities, the combination of data and location processing is possible.

According to the exemplary flow chart of Fig. 1, a method for detection and storage of asset information comprises scanning S1, by a mobile terminal 1, an identification tag 21 of an asset 2, the identification tag 21 comprising asset information, determining S2, by the mobile terminal 1, a position of the mobile terminal 1 using at least two localisation procedures and storing and/or transmitting S3, by the mobile terminal 1, the position of the mobile terminal 1 as the position of the asset 2.

In an embodiment, the location of the mobile terminal 1 gets assigned as the location of the asset 2 when the identification tag 21 gets scanned, i.e. directly after scanning, to take the actual location.

Moreover, according to an embodiment, the mobile terminal 1 is positioned in front of or very close, e.g. less than 1m, to the asset 2 to be located and the position or location data may directly be processed.

In an embodiment, a first localisation procedure determines the position of the mobile terminal 1 based on a GPS signal. That is, the mobile terminal 1 is configured to obtain its position via a GPS signal and assigns the obtained position as the position of the asset 2.

In an embodiment, the position is corrected or complemented as of the inaccuracy of the GPS itself, for example in an indoor environment where the GPS signal may be inaccurate.

In an embodiment, a second localisation procedure performed by the mobile terminal 1 in addition to the first localisation procedure via GPS is performed. The second localisation procedure may comprise one of localisation via a cellular network, location via a reference point having a known location, localisation via another mobile terminal in the vicinity of the mobile terminal, manually correcting the position of the asset, or manually entering localisation data.

In an embodiment, a refence point may be identified with the exact coordinates, e.g. by way of a GPS signal of the mobile terminal 1. In the case of an indoor environment and using a GPS signal for obtaining the reference point, the refence point may be located outside the indoor environment. However, the present disclosure is not limited to this example. Other embodiments may use different methods to obtain a position, e.g. any of the once described herein, or the reference point may be set manually by a user, e.g. in a virtual map. In addition, the reference point method may be used in indoor and outdoor environments.

From the identified reference point, the distance to the asset 2 may be measured optically with the mobile terminal 1, e.g., using a mobile app, and the new coordinates may be calculated automatically from that refence point using the measured distance. Alternatively, any other method to measure a distance between two points (the reference point and the asset 2) may also be used.

In an embodiment, the asset 2 and the actual location are placed in a digital map relative to other components within the system. The mobile terminal 1 may be configured to generate the digital map or have a digital map stored in its memory, wherein the asset 2 may then be placed within that digital map. The digital map may then be sent, by the mobile terminal 1, to an external server. Alternatively, the mobile terminal 1 may be configured to send the coordinates to the external server, which may be configured to place the asset 2 in a digital map in accordance with the received coordinates.

The digital map (virtual map) may be displayed to a user on the mobile terminal 1 and/or any secondary mobile or stationary device, e.g. a tablet, a personal computer, an external server or the like. The digital map may be configured to allow the user to shift the asset 2 in place manually, e.g. by touch gestures or using a hand-held pointing device like a computer mouse. The coordinates by said shift may then be stored as the new coordinates of the asset 2 within the digital map.

In an embodiment, the coordinates (coordinates and/or said new coordinates) may be stored in a memory of the mobile terminal 1 and/or on an external server, e.g. a fleet management server. The external server may receive the coordinates from the mobile terminal 1, which may send the coordinates automatically via a cellular network to the external server upon determination.

Hence, the localisation procedure via a reference point having a known location may comprise receiving, by the mobile terminal 1, coordinates of the reference point and measuring, by the mobile terminal 1, a distance from the mobile terminal 1 to the reference point, and calculating, by the mobile terminal 1, the position of the mobile terminal 1 based on the measured distance. Measuring the distance may be performed optically. The localisation procedure via a reference point may be performed indoors.

In an embodiment, a localisation procedure via a cellular network may be used. The localisation procedure may comprise determining, by the mobile terminal 1, at least one network cell to which the mobile terminal 1 is connected and calculating the position of the mobile terminal 1 based on a location of the network cell.

As described above, the position of the mobile terminal 1, i.e. of the asset 2, may be stored in a map (digital map) on the mobile terminal 1 or sent to a cloud server 3 (external server), other computing device 4 or the asset 2. The map may be updated by the respective device according to position or composition changes of the assets 2. Also, a history of the assets 2 may be saved indicating previous locations and/or compositions (parts) by the respective device, e.g. the mobile terminal 1 or the cloud server 3. Thus, a distribution map may be obtained for fleet management.

The method may further comprise applying, by the mobile terminal 1, a zero-touch protocol. The zero-touch protocol comprises identifying an address of a location-aware provisioning server, LAP server, establishing a connection between the mobile terminal 1 and the LAP server, receiving, by the mobile terminal, asset information from the LAP server and transmitting, by the mobile terminal, the position of the asset 2 to the LAP server. These steps may be performed automatically without human intervention.

In an embodiment, said zero-touch protocol may be part of a method of provisioning and registration of a device (asset 2) with an energy- or power system. The method comprising: pre-registration of the device with the energy- or power system, and provisioning of the device and further registration of the device with the energy- or power system; wherein pre-registration of the device with the energy- or power system comprises the steps of:
1a. an operator authenticating themselves with the energy- or power system,
1b. the operator obtaining identification information about the device, preferably by scanning a code on the device as described above,
1c. the operator obtaining information about a location of the device, preferably based on a GPS signal as described above, and
1d. the operator pre-registering the device with a location-aware provisioning server, LAP server, of the energy- or power system, wherein pre-registering the device with the LAP server comprises sending a message to the LAP server that contains the identification information about the device and the information about the location of the device.

In an embodiment, steps 1a. to 1d. of the pre-registration are performed using a mobile device of the operator, particularly a mobile app running on the mobile device of the operator and/or a web application accessed via the mobile device of the operator.

In an embodiment, provisioning of the device and further registration of the device with the energy- or power system comprises the steps of: connecting the device with a network; and initiating, by the device, the provisioning of the device through the LAP server, preferably wherein initiating the provisioning involves initiating a zero-touch provisioning protocol on the LAP server.

In an embodiment, connecting the device with the network comprises: the LAP server providing the identification information about the device to a factory server of a manufacturer of the device; the LAP server receiving in response thereto connection information for the device from the factory server; and the LAP server establishing a connection with the device using the connection information received from the factory server.

In an embodiment, initiating the provisioning comprises: sending, by the device, identification information about itself to the LAP server via the network; checking, by the LAP server, whether the device has already been pre-registered by an authorized operator; and if the device has not been pre-registered by an authorized operator, cancelling the provisioning of the device.

In an embodiment, initiating the provisioning further comprises: checking, by the LAP server, whether information about the location of the device is available; and if no information about the location of the device is available, cancelling the provisioning of the device.

In an embodiment, initiating the provisioning further comprises validating, by the LAP server via a fleet management server, that the identification information about the device and the information about the location of the device are valid, preferably wherein the validating involves verifying that an installation of a device of the given type is expected at the site specified by the information about the location of the device; and if the validation fails, cancelling the provisioning of the device.

In an embodiment, the method further comprises: configuring, by the LAP server, the device, particularly configuring the device using said zero-touch provisioning protocol as described above.

In an embodiment, the further registration of the device with the energy- or power system comprises: sending, by the LAP server, data about the successfully registered device and its location to a fleet management server, preferably including at least the identification information and the information about the location of the device.

In an embodiment, the method is provided "as-a-service" on existing infrastructure.

In an embodiment, step 1c. of the operator obtaining information about a location of the device further comprises: obtaining information about a quality of the information about the location of the device; and, storing the information about the quality of the information about the location of the device, preferably wherein the information about the quality of the information about the location of the device is stored in the form of: a color code indicating a low, medium, or high quality of the information about the location of the device, and/or a value in meters indicating an accuracy of the information about the location of the device.

In an embodiment, the information about the location of the device uses a location format that allows for a coordinate-to-address conversion that enables fine-grained filtering capabilities, particularly filtering for one or more of the following: street name, intersection, locality.

In an embodiment, the method further comprises: the LAP server marking each pre-registered device that was already successfully configured using the zero-touch provisioning protocol; the LAP server detecting that a new device uses the same identification information as an already-configured device; and the LAP server emitting a warning in response to the detecting that the new device uses the same identification information as an already-configured device.

In an embodiment, the method further comprises, after successful registration of the device with the energy- or power system, the steps of: a person authenticating themselves with the energy- or power system via a mobile device of the person, particularly by using a mobile app running on the mobile device of the person and/or a web application accessed via the mobile device of the person; obtaining, by using the mobile device of the person, the identification information about the device, preferably by scanning the code on the device; sending, by the mobile device of the person, the identification information to the LAP server and/or the fleet management server, and receiving in response thereto stored information about the location of the device; obtaining, by using the mobile device of the person, up-to-date information about a current location of the device; comparing the up-to-date information about the current location of the device with the obtained stored information about the location of the device; in response to the comparison yielding a difference above a threshold value, prompting the person to indicate whether the stored information about the location of the device shall be updated; and if the indication is that the information shall be updated, updating the stored information about the location of the device with the up-to-date information about the current location of the device.

In an embodiment, the energy- or power system comprises a large number of devices, preferably at least 100 devices, more preferably at least 1000 devices.

In an embodiment, the identification information about the device is divided into two parts, wherein a first part of the identification information is provided to the LAP server during pre-registration in the message to the LAP server that contains the identification information about the device and the information about the location of the device, wherein a second part of the identification information is provided to the LAP server by the device via the network during initiating the provisioning, and wherein the provisioning of the device only proceeds when the two parts match.

In an embodiment, the method is terminated if the provisioning and further registration of the device is not initiated by the device within a threshold amount of time after reception at the LAP server of the message that contains the identification information about the device and the information about the location of the device, preferably wherein threshold amount of time is one minute.

In an embodiment, the method further comprises: taking a picture of the device with the mobile device of the operator, and providing the picture to the LAP server and/or to the fleet management server, wherein the picture of the device is compared with one or more reference pictures by the LAP server and/or the fleet management server.

In an embodiment, the picture of the device is compared with one or more reference pictures by the LAP server and/or the fleet management server.

In an embodiment, a device type of the device is determined based on the comparison of the picture of the device with the one or more reference pictures, and wherein the determined device type is compared to the identification information about the device obtained in step 1b. to assess correctness of the determined device type.

In an embodiment, a system for the provisioning and registration of a device with an energy- or power system in accordance with the method as described above is provided. The system comprises: a location-aware provisioning server, LAP server; and a fleet management server; wherein the LAP server is adapted for:
14a. receiving an authentication of an operator;
14b. receiving a message from the authenticated operator that contains identification information about the device and information about the location of the device; and
14c. pre-registering the device based on the information contained in the received message; and
wherein the system is further adapted for performing provisioning of the device and further registration of the device with the energy- or power system.

The asset information may comprise at least one of a type of asset 2, a location of the asset 2, previous locations of the asset 2, a maintenance state, a date of initial operation, components of the asset 2, or a composition of the asset 2.

Storing S3 the position of the mobile terminal 1 as the position of the asset 2 may comprise storing the position of the asset 2 in a memory of the mobile terminal 1. Transmitting S3 the position of the mobile terminal 1 as the position of the asset 2 may comprise transmitting the position of the asset 2 to the asset 2 and/or a remote server and storing the position of the asset 2 on the asset 2 and/or remote server. The transmitting may be performed on demand.

The method may be executed using a mobile app running on the mobile terminal 1. The method may be performed by an (human) operator.

The asset 2 may be an Intelligent Electronic Device, IED, or a power system component.

The final position of the asset 2 and the related data with the composition may be stored either in a cloud system, e.g. a server, or to an "on premise" database. The data from either the cloud or local system can be displayed in a virtual map for further use, e.g. as described above. In a basic view the distribution of assets 2 in the virtual map is provided. The virtual map may be provided with further view layers for example by age, maintenance condition, voltage level, network, history of assets 2 and IED, etc.

In an embodiment, the method may also allow a maintenance crew (or any other user) equipped with a corresponding mobile APP on a mobile device to view said virtual map and therefore allow the crew to identify on which assets 2 the crew is working on. The mobile device of the maintenance crew may also be provided with a tracking function to obtain the coordinates of the mobile device and may provide the coordinates in said virtual map such that the crew can easily identify their own position, e.g. in relation to the assets 2.

In an embodiment, the movements of the crew may be recorded and added as information to the virtual map. This function may be established when scanning the barcode of the asset 2 in front. In this moment, i.e. the moment of scanning the barcode, the position gets synchronised with the user and the movements get aligned to this refence.

The present disclosure also relates to a mobile terminal 1 for detection and storage of asset information. The mobile terminal 1 comprises a processor 10 configured to scan an identification tag 21 of an asset 2, the identification tag 21 comprising asset information, determine a position of the mobile terminal 1 using at least two localisation procedures and store and/or transmit the position of the mobile terminal 1 as the position of the asset 2.

As shown in Fig. 2, the mobile terminal may further comprise a camera module 11, a memory 12, a transceiver module 13 and at least one localisation module 14, 15. The first localisation module may be a GPS module 14.

The processor 10 may be further configured to perform the method as described above.

The present disclosure also relates to a system for detection and storage of asset information, the system comprising an asset 2 and a mobile terminal 1 as outlined above.

The system may further comprise a cloud server 3 and/or a computing device 4 such as a personal computer, a server, a database or the like.

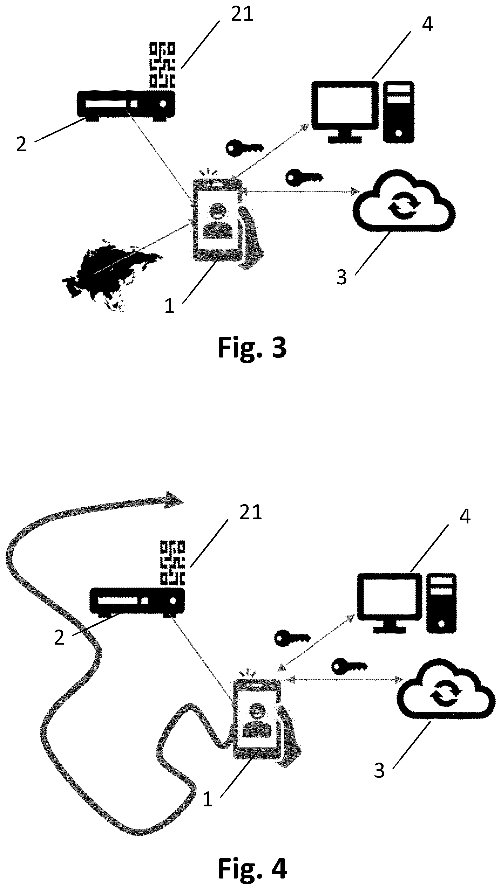

Fig. 3 is an exemplary depiction of a system according to the present disclosure. The mobile terminal 1 is configured to scan the identification tag 21 of the asset 2 and to determine the location of the mobile terminal 1 as described above (indicated by the schematic map). Moreover, the mobile terminal 1 may be in (encrypted) communication with a cloud server 3 and/or computing device 4 and/or the asset 2 to transmit and/or store the asset's 2 location.

Fig. 4 is a schematic depiction of a localisation procedure according to an embodiment using another mobile terminal in the vicinity as the second localisation procedure. In particular, the mobile terminal 1 is configured to scan the identification tag 21 of the asset 2 and to determine the location of the mobile terminal 1 using a nearby device having a known location as described above. Again, the mobile terminal 1 may be in (encrypted) communication with a cloud server 3 and/or computing device 4 and/or the asset 2 to transmit and/or store the asset's 2 location.

The mobile terminal 1 and the app running thereon, respectively, may be compatible with the IED, or there may be a provision for the data set. To transfer data, there may also be a communication channel to the lED established, which may be encrypted to close a possible security gap.

In summary, a mobile terminal, e.g. using a mobile application, receives the identification of an asset via an identification tag. Either the asset which gets registered is generating a barcode on a display, or the barcode is provided as a sticker on the lED/asset. The device information data may be linked in the very moment of the scan with the current location of the mobile device. The information may be mapped for confirmation and check and the information may be sent on demand to the remote server. The process can be redone at any time.

The mobile terminal or application can set a refence point and measure the actual distance to the asset from that point and calculate the new coordinates. This is particularly useful for indoor usage when no GPS is available. The position can be shifted to an accurate position on an asset distribution map by a user. The user/operator can synchronise to an accurate position when scanning to a registered barcode by the mobile terminal. The user can be tracked from remote when using the app and scanning one single but registered code. The barcode may be linked to a composition set of the asset or it contains the composition of the asset.

In an embodiment, the asset gets updated with new components. In this case, the code on the components can also be scanned. The mobile terminal or application may link the additional component to the asset at the same location and update the composition accordingly. The updated composition may be reflected in an updated barcode or QR code.

By the features of the present application, a quick, reliable and precise method, mobile terminal and system for detection and storage of asset information is provided. By combining two or more localisation procedures, a more accurate positioning may be achieved. Additional information on the asset may also be integrated. Hence, an overview over all assets and their composition may be provided.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Method for detection and storage of asset information, the method comprising:
scanning (51), by a mobile terminal, an identification tag (21) of an asset (2), the identification tag (21) comprising asset information,
determining (S2), by the mobile terminal, a position of the mobile terminal using at least two localisation procedures, and
storing and/or transmitting (S3), by the mobile terminal, the position of the mobile terminal as the position of the asset (2).

2. Method according to claim 1, wherein the determining (S2), by the mobile terminal, a position of the mobile terminal using at least two localisation procedures comprises determining the position of the mobile terminal based on a GPS signal as a first localisation procedure and a second localisation procedure,
wherein the second localisation procedure comprises one of localisation via a cellular network, localisation via a reference point having a known location, localisation via another mobile terminal in the vicinity of the mobile terminal, manually correcting the position of the asset (2), or manually entering localisation data.

3. Method according to claim 2, wherein the localisation procedure via a reference point having a known location comprises receiving, by the mobile terminal, coordinates of the reference point and measuring, by the mobile terminal, a distance from the mobile terminal to the reference point, and calculating, by the mobile terminal, the position of the mobile terminal based on the measured distance,
wherein measuring the distance is preferably performed optically, and
wherein the localisation procedure via a reference point is preferably performed indoors.

4. Method according to claim 2, wherein the localisation procedure via a cellular network comprises determining, by the mobile terminal, at least one network cell to which the mobile terminal is connected and calculating the position of the mobile terminal based on a location of the network cell.

5. Method according to any one of claims 1 to 4, wherein the method further comprises applying, by the mobile terminal, a zero-touch protocol, the zero-touch protocol comprising:
identifying an address of a location-aware provisioning server, LAP server,
establishing a connection between the mobile terminal and the LAP server, receiving, by the mobile terminal, asset information from the LAP server, and
transmitting, by the mobile terminal, the position of the asset (2) to the LAP server;
wherein these steps are preferably performed automatically without human intervention.

6. Method according to any one of the preceding claims, wherein the asset information comprises at least one of a type of asset (2), a location of the asset (2), previous locations of the asset (2), a maintenance state, a date of initial operation, components of the asset (2), or a composition of the asset (2).

7. Method according to any one of the preceding claims, wherein storing the position of the mobile terminal as the position of the asset (2) comprises storing the position of the asset (2) in a memory of the mobile terminal.

8. Method according to any one of the preceding claims, wherein transmitting the position of the mobile terminal as the position of the asset (2) comprises transmitting the position of the asset (2) to the asset (2) and/or a remote server and storing the position of the asset (2) on the asset (2) and/or remote server, wherein preferably the transmitting is performed on demand.

9. Method according to any one of the preceding claims, wherein the information tag is a 2D barcode, a 3D barcode, a QR code, or an RFID tag,
wherein preferably, the 2D barcode, the 3D barcode, or the QR code is displayed on a display of the asset (2) and/or physically provided on the asset (2), and
wherein the information tag is preferably updated according to the determined position of the asset (2).

10. Method according to any one of the preceding claims, wherein the method is performed using a mobile app running on the mobile terminal.

11. Method according to any one of the preceding claims, wherein the asset (2) is an Intelligent Electronic Device, IED, or a power system component.

12. Mobile terminal (1) for detection and storage of asset information, wherein the mobile terminal comprises a processor (10) configured to scan an identification tag (21) of an asset (2), the identification tag (21) comprising asset information,
determine a position of the mobile terminal using at least two localisation procedures, and
store and/or transmit the position of the mobile terminal as the position of the asset (2).

13. Mobile terminal (1) according to claim 12, comprising a camera module (11), a memory (12), a transceiver module (13) and at least one localisation module (14, 15),
wherein preferably, the mobile terminal comprises a GPS module (14) as a first localisation module.

14. Mobile terminal according to any one of claims 12 or 13, wherein the processor (10) is further configured to perform the method according to any one of claims 1 to 12.

15. System for detection and storage of asset information, the system comprising:
an asset (2), and
a mobile terminal (1) according to any one of claims 12 to 14.
